# EUROPEAN PATENT SPECIFICATION

(11) **EP 4 444 813 B1**
(45) Date of publication and mention of the grant of the patent: **30.09.2026**
(21) Application number: 22829921.0
(22) Date of filing: 08.12.2022
(51) Int. Cl.: C09J 123/08, C09J 123/14, C08L 23/14, C08L 23/08

(54) **HOT MELT ADHESIVE**
HEISSSCHMELZKLEBER
ADHÉSIF THERMOFUSIBLE

(30) Priority: 09.12.2021 JP 2021200037
(43) Date of publication of application: 16.10.2024
(73) Proprietor: Henkel AG & Co. KGaA, 40589 Düsseldorf (DE)
(72) Inventor: TAKAMORI, Ai, Minoo-shi, Osaka 562-8586 (JP)
(86) International application number: PCT/JP2022/045272
(87) International publication number: WO 2023/106366

(56) References cited:
- WO-A1-2020/122008
- WO-A1-2022/124256
- WO-A1-2022/124257

## Description

### [Technical Field]

The present invention relates to a hot melt adhesive, more specifically a hot melt adhesive that has good adhesion to various substrates and is particularly suitable for assembling paper substrates such as corrugated cardboards.

### [Background Art]

Hot melt adhesives are solvent-free adhesives that exhibit adhesion when heat-melted to be applied to an adherend and subsequently cooled to solidify; therefore, hot melt adhesives enable instantaneous adhesion and rapid adhesion and are thus used in a wide range of fields including paper processing, woodworking, sanitary materials, and electronics.

As base polymers of such hot melt adhesives, depending on the intended use, for example, ethylene-carboxylic acid ester copolymers such as ethylene-vinyl acetate copolymers (hereinafter, also referred to as "EVA") and ethylene-ethyl acrylate copolymers (hereinafter, also referred to as "EEA"); olefin-based resins such as polyethylenes, polypropylenes, and amorphous poly-α-olefins (hereinafter, also referred to as "APAO"); synthetic rubbers such as styrene-based block copolymers (e.g., styrene-isoprene-styrene-based block copolymers (hereinafter, also referred to as "SIS")), styrene-butadiene-styrene-based block copolymers (hereinafter, also referred to as "SBS"), and hydrogenated products thereof; and polyurethanes are generally used.

For application of a hot melt adhesive, a dedicated application device called "hot melt applicator" is used in many cases. The hot melt applicator has a nozzle that is a discharge port, and a hot melt adhesive is heated to about 120 to 190°C and discharged from a tip of the nozzle to be applied to an adherend. During the application of the hot melt adhesive, a string-like matter of the hot melt adhesive may be generated between the tip of the nozzle and the adherend. Such a string-like matter is generated due to the stringiness of the hot melt adhesive, and contaminates the nozzle and the adherend. Therefore, it is an important duty for adhesive manufacturers to develop a hot melt adhesive with less stringing.

PTLs 1 to 3 disclose hot melt adhesives that contain an ethylene-carboxylic acid ester copolymer for reduction of stringing.

PTL 1 discloses a hot melt adhesive that contains a functionalized ethylene-*α*-olefin copolymer and an ethylene-(meth)acrylic acid ester copolymer (see [Claim 1] and [0063] to [0066]).

The hot melt adhesive of PTL 1 reduces the generation of a string-like matter to a certain extent. However, the hot melt adhesive of PTL 1 cannot be said to have a sufficient thermal stability, and it is thus demanded to further improve the thermal stability.

PTL 2 discloses a hot melt adhesive that contains a polypropylene polymer having a glass transition temperature of -15°C or lower, an ethylene-*α*-olefin copolymer, and an ethylene-carboxylic acid ester copolymer ([Claim 1], [0075] to [0077], and [0091]). The hot melt adhesive of PTL 2 can reduce stringing to a certain extent; however, it cannot be said to have an excellent thermal stability.

The hot melt adhesive of PTL 3 contains a metallocene-based ethylene-propylene copolymer and an ethylene-carboxylic acid ester copolymer ([Claim 1], [0109], and [0111]). The hot melt adhesive of PTL 3 exhibits reduced stringing and improved thermal stability as compared to the hot melt adhesives of PTLs 1 and 2; however, it cannot be said to fully satisfy the high performance demanded by the users.

In recent years, the users demand hot melt adhesives to have not only reduced stringing and improved thermal stability, but also adhesion in a wide temperature range from a low temperature to a high temperature and adhesive performance to a (hardly adhesive) substrate coated with an agent.

Further, hot melt adhesives are sometimes stored at a high temperature in midsummer or piled up in a form of adhesive blocks at room temperature. Therefore, hot melt adhesives are required to have excellent heat-resistant creep property and hot tack property so that they are not deformed in a high-temperature condition.

### [Citation List]

### [Patent Literature]

[PTL 1] JP 2019-34999 A
[PTL 2] JP 2019-116573 A
[PTL 3] JP 2020-94144 A

### [Summary of Invention]

### [Technical Problem]

An object of the present invention is to provide a hot melt adhesive which can reduce stringing, is excellent in thermal stability, excellent in adhesive property to a paper, and also excellent in heat-resistant creep property and hot tack property.

### [Solution to Problem]

The present inventors intensively studied to discover that: a hot melt adhesive containing a specific copolymer of ethylene with an olefin having 3 to 20 carbon atoms, a specific ethylene-carboxylic acid ester copolymer, and a wax can solve the above-described problems; and such a hot melt adhesive is preferred in the fields of paper processing, woodworking and the like, thereby completing the present invention.

That is, the present specification encompasses the following embodiments.
1. A hot melt adhesive, comprising: (A) a copolymer of ethylene with an olefin having 3 to 20 carbon atoms; (B) an ethylene-carboxylic acid ester copolymer; and (C) a wax,
   wherein
   the (A) copolymer of ethylene with an olefin having 3 to 20 carbon atoms comprises (A1) a metallocene-based copolymer of ethylene with propylene, and
   the (B) ethylene-carboxylic acid ester copolymer comprises (B1) an ethylene-carboxylic acid ester copolymer which has a structural unit derived from the carboxylic acid ester in an amount of 2% by mass or more and less than 25% by mass, and
   wherein the component (B1) comprises an ethylene-vinyl carboxylate copolymer or an ethylene-allyl carboxylate copolymer and
   wherein the ethylene-vinyl carboxylate copolymer or the ethylene-allyl carboxylate copolymer has a melt flow rate of 50 g/10 min to 400 g/10 min as determined at 190°C with a 2.16-kg load in accordance with JIS K7210.
2. The hot melt adhesive according to 1, wherein the (A) copolymer of ethylene with an olefin having 3 to 20 carbon atoms comprises (A2) a metallocene-based copolymer of ethylene with octene.
3. The hot melt adhesive according to 1 or 2, wherein the (A) copolymer of ethylene with an olefin having 3 to 20 carbon atoms comprises (A3) a metallocene-based copolymer of ethylene with hexene.
4. The hot melt adhesive according to 2, wherein the (A2) metallocene-based copolymer of ethylene with octene comprises a metallocene-based copolymer of ethylene with octene, which is modified with a carboxylic acid and/or a carboxylic anhydride.
5. The hot melt adhesive according any one of 1 to 4, wherein the (C) wax comprises a Fischer-Tropsch wax.
6. The hot melt adhesive according any one of 1 to 5, wherein the component (B1) is contained in an amount of 5 to 60 parts by mass with respect to a total of 100 parts by mass of the components (A), (B), and (C).
7. The hot melt adhesive according any one of 1 to 6, further comprising a (D) tackifying resin.
8. A paper product, comprising the hot melt adhesive according to any one of 1 to 7.

### [Advantageous Effects of Invention]

The hot melt adhesive according to one embodiment of the present invention can reduce stringing, exhibits excellent thermal stability and excellent adhesion to paper, and is excellent in hot tack property and heat-resistant creep property.

When the hot melt adhesive according to one embodiment of the present invention is applied from a nozzle to an adherend such as paper, the nozzle and the adherend are not contaminated with a string-like matter of the hot melt adhesive. The hot melt adhesive hardly generates a carbide or a precipitate even when stored in a storage tank over a prolonged period. Further, blocks of the hot melt adhesive can maintain a certain shape without deformation even when they are stored in a form of a pile (or stack) in a warehouse.

### [Description of Embodiments]

The hot melt adhesive according to one embodiment of the present invention contains, as indispensable components: (A) a copolymer of ethylene with an olefin having 3 to 20 carbon atoms; (B) an ethylene-carboxylic acid ester copolymer; and (C) a wax.

The term "hot melt adhesive" used herein refers to an adhesive that is solid at normal temperature but has a fluidity when melted by heating, and can be applied to an object such as a substrate or an adherend and cured by cooling to perform adhesion.

### <(A) Copolymer of Ethylene with Olefin Having 3 to 20 Carbon Atoms>

In one embodiment of the present invention, the "(A) copolymer of ethylene with an olefin having 3 to 20 carbon atoms" refers to a copolymer of ethylene and an olefin having 3 to 20 carbon atoms, and it is not particularly limited as long as the intended hot melt adhesive of the present invention can be obtained.

Specific examples of the "olefin having 3 to 20 carbon atoms" include propylene, 1-butene, 1-pentene, 1-hexene, 1-heptene, 1-octene, 1-nonene, 1-decene, *cis*-2-butene, *trans-*2-butene, isobutylene, *cis*-2-pentene, *trans*-2-pentene, 3-methyl-1-butene, 2-methyl-2-butene, and 2,3-dimethyl-2-butene. The olefin having 3 to 20 carbon atoms is preferably an olefin having 3 to 10 carbon atoms, more preferably propylene, butene, hexene, or octene, still more preferably propylene, butene, or octene, particularly preferably octene.

The (A) copolymer of ethylene with an olefin having 3 to 20 carbon atoms is preferably a copolymer polymerized using a metallocene catalyst. The hot melt adhesive according to one embodiment of the present invention, by containing the copolymer (A) (metallocene-based copolymer of ethylene with an olefin having 3 to 20 carbon atoms) polymerized using a metallocene catalyst, exhibits an improved thermal stability, excellent adhesion at a high temperature (60°C), and an improved heat-resistant creep property.

Examples of the (A) copolymer of ethylene with an olefin having 3 to 20 carbon atoms include copolymers of ethylene and octene (ethylene-octene copolymers), copolymers of ethylene, propylene, and 1-butene (ethylene-propylene-butene copolymers), copolymers of ethylene and propylene (ethylene-propylene copolymers), and copolymers of ethylene and hexene (ethylene-hexene copolymers).

Examples of the (A) metallocene-based copolymer of ethylene with an olefin having 3 to 20 carbon atoms include: (A1) a copolymer of ethylene and propylene, which is polymerized using a metallocene catalyst (metallocene-based copolymer of ethylene with propylene; (A2) a copolymer of ethylene and octene, which is polymerized using a metallocene catalyst (metallocene-based copolymer of ethylene with octene); and (A3) a copolymer of ethylene and hexene, which is polymerized using a metallocene catalyst (metallocene-based copolymer of ethylene with hexene). As these (A) copolymers of ethylene with an olefin having 3 to 20 carbon atoms, commercially available products can be used.

Examples of the (A1) metallocene-based copolymer of ethylene with propylene include VISTAMAXX (trade name) Series manufactured by Exxon Mobil Corporation.

Examples of the (A2) metallocene-based copolymer of ethylene with octene include AFFINITY GA1900 (trade name), AFFINITY GA1950 (trade name), AFFINITY GA1875 (trade name), AFFINITY GA1000R (trade name), AFFINITY EG8185 (trade name), AFFINITY EG8200 (trade name), ENGAGE 8137 (trade name), ENGAGE 8180 (trade name), and ENGAGE 8400 (trade name), all of which are manufactured by Dow Chemical Company.

Examples of the (A3) metallocene-based copolymer of ethylene with hexene include NIPOLON Z HM510R manufactured by Tosoh Corporation, and EXCELLEN FX402 manufactured by Sumitomo Chemical Co., Ltd.

The (A) copolymer of ethylene with an olefin having 3 to 20 carbon atoms may also contain (A4) a copolymer of ethylene and butene (ethylene-butene copolymer) which is polymerized using a metallocene catalyst, or a polymer which is not polymerized using a metallocene catalyst.

Examples of the (A4) metallocene-based copolymer of ethylene with butene include EXCELLEN FX352 (trade name), EXCELLEN FX555 (trade name), EXCELLEN FX532 (trade name), and EXCELLEN FX558 (trade name), which are manufactured by Sumitomo Chemical Co., Ltd.

Specific examples of the polymer which is not polymerized using a metallocene catalyst include:
ethylene-butene copolymers such as TAFMER A4085 manufactured by Mitsui Chemicals, Inc.;
ethylene-propylene-1-butene copolymers such as VESTOPLAST 730 (trade name) and VESTOPLAST 708 (trade name) which are manufactured by Evonik Degussa GmbH; and
ethylene-propylene copolymers such as EASTOFLEX E1016PL-1, AERAFIN 35 and AERAFIN 17 which are manufactured by Eastman Chemical Co., and LEXAN TACK 2304 manufactured by REXtac LLC.
These (A) copolymers of ethylene with an olefin having 3 to 20 carbon atoms may be used singly or in combination.

The hot melt adhesive according to one embodiment of the present invention contains the (A1) metallocene-based copolymer of ethylene with propylene for improvement of the heat resistance. The (A1) metallocene-based copolymer of ethylene with propylene improves the heat-resistant creep property, the hot tack property, and the thermal stability of the hot melt adhesive.

The hot melt adhesive according to one embodiment of the present invention preferably contains the (A1) metallocene-based copolymer of ethylene with propylene and the (A2) metallocene-based copolymer of ethylene with octene. By incorporating the components (A1) and (A2), the adhesive performance of the hot melt adhesive in a low-temperature range is markedly improved.

The (A2) metallocene-based copolymer of ethylene with octene preferably contains a product modified with a carboxylic acid and/or a carboxylic anhydride, specifically, for example, "a metallocene-based copolymer of ethylene with octene, which is modified with maleic anhydride by graft polymerization with maleic anhydride". When the hot melt adhesive according to one embodiment of the present invention contains "a metallocene-based copolymer of ethylene with octene, which is modified with a carboxylic acid and/or a carboxylic anhydride", the hot melt adhesive exhibits superior adhesion to a substrate coated with an agent as well as superior low-temperature adhesion.

Examples of a commercially available product of the "metallocene-based copolymer of ethylene with octene, which is modified with maleic anhydride" include AFFINITY GA1000R (trade name) manufactured by Dow Chemical Company.

### <(B) Ethylene-Carboxylic Acid Ester Copolymer>

In one embodiment of the present invention, the "(B) ethylene-carboxylic acid ester copolymer" refers to a copolymer of ethylene and a carboxylic acid ester having an ethylenic double bond, and it is not particularly limited as long as the intended hot melt adhesive of the present invention can be obtained.

In the present specification, examples of the "carboxylic acid ester having an ethylenic double bond" include: (meth)acrylic acid esters such as methyl (meth)acrylate, ethyl (meth)acrylate, butyl (meth)acrylate, and 2-ethylhexyl (meth)acrylate; vinyl carboxylates and allyl carboxylates such as vinyl acetate and allyl acetate.

The term "(meth)acrylic acid ester" used herein encompasses both an acrylic acid ester and a methacrylic acid ester.

In one embodiment of the present invention, the "carboxylic acid ester having an ethylenic double bond" preferably contains a (meth)acrylic acid ester such as methyl (meth)acrylate, ethyl (meth)acrylate, butyl (meth)acrylate, or 2-ethylhexyl (meth)acrylate, more preferably contains methyl (meth)acrylate, ethyl (meth)acrylate, or butyl (meth)acrylate, particularly desirably contains methyl methacrylate or ethyl acrylate.

Examples of the "(B) ethylene-carboxylic acid ester copolymer" include: copolymers of ethylene and a (meth)acrylic acid ester (ethylene-(meth)acrylic acid ester copolymers); copolymers of ethylene and a vinyl carboxylate (ethylene-vinyl carboxylate copolymers); and copolymers of ethylene and an allyl carboxylate (ethylene-allyl carboxylate copolymers). It is noted here that "carboxylate" in the vinyl carboxylate and the allyl carboxylate is not required to have an ethylenic double bond, and may be a saturated carboxylate.

The (B) ethylene-carboxylic acid ester copolymer preferably contains a copolymer of ethylene and a (meth)acrylic acid ester (ethylene-(meth)acrylic acid ester copolymer), more preferably contains at least one selected from an ethylene-methyl (meth)acrylate copolymer, an ethylene-ethyl (meth)acrylate copolymer, an ethylene-butyl (meth)acrylate copolymer, and an ethylene-2-ethylhexyl (meth)acrylate copolymer, still more preferably contains at least one selected from an ethylene-methyl (meth)acrylate copolymer, an ethylene-ethyl (meth)acrylate copolymer, and an ethylene-butyl (meth)acrylate copolymer, particularly desirably contains an ethylene-methyl methacrylate copolymer and/or an ethylene-ethyl acrylate copolymer.

In the present invention, the "(B) ethylene-carboxylic acid ester copolymer" contains (B1) an ethylene-carboxylic acid ester copolymer which has a structural unit derived from the carboxylic acid ester in an amount of 2% by mass or more and less than 25% by mass, and a melt flow rate of 1 to 400 g/10 min. The content of the structural unit derived from the carboxylic acid ester in the ethylene-carboxylic acid ester copolymer may be 3% by mass to 24% by mass, or 5% by mass to 24% by mass.

By controlling the content of the structural unit derived from the carboxylic acid ester in the component (B1) to be 2% by mass or more and less than 25% by mass, the hot melt adhesive according to the present invention is enabled to reduce stringing, and the thermal stability and the heat-resistant creep property are improved.

The component (B1) preferably contains at least one selected from an ethylene-methyl (meth)acrylate copolymer, an ethylene-ethyl (meth)acrylate copolymer, an ethylene-butyl (meth)acrylate copolymer, and an ethylene-2-ethylhexyl (meth)acrylate copolymer, more preferably contains at least one selected from an ethylene-methyl methacrylate copolymer, an ethylene-butyl acrylate copolymer, and an ethylene-ethyl acrylate copolymer, particularly preferably contains an ethylene-methyl methacrylate copolymer and/or an ethylene-butyl acrylate copolymer, and most desirably contains an ethylene-methyl methacrylate copolymer.

When the component (B1) is any of the above-described copolymers, the hot melt adhesive according to one embodiment of the present invention exhibits superior hot tack property with reduced stringing.

In the present specification, the content of a structural unit derived from a carboxylic acid ester in the component (B1) means an amount (% by mass) of the structural unit derived from the carboxylic acid ester with respect to a total amount of the (B1) ethylene-carboxylic acid ester copolymer.

The (B1) ethylene-carboxylic acid ester copolymer has a chemical structure derived from ethylene and a chemical structure derived from the carboxylic acid ester.

The "structural unit derived from a carboxylic acid ester" refers to, among the chemical structures of the (B1) ethylene-carboxylic acid ester copolymer, a chemical structure derived from the carboxylic acid ester.

For example, "(B1) an ethylene-methyl methacrylate copolymer having a methyl methacrylate content of 20% by mass" means that a chemical structure derived from methyl methacrylate is contained in an amount of 20 parts by mass in 100 parts by mass of the (B1) ethylene-methyl methacrylate copolymer.

In the present specification, the content of a structural unit derived from the (B1) ethylene-carboxylic acid ester copolymer is determined by infrared absorption spectrometry using a press sheet of the component (B1).

For example, when the carboxylic acid ester is methyl methacrylate, the content of a structural unit derived from methyl methacrylate in an ethylene-methyl methacrylate copolymer can be measured in accordance with JIS K7192.

A peak attributed to the carboxylic acid ester copolymer is used as characteristic absorption of an infrared absorption spectrum, and the absorbance is corrected with the thickness of the press sheet to determine the comonomer content. For example, when the carboxylic acid ester is methyl methacrylate, the content of methyl methacrylate unit in an ethylene-methyl methacrylate copolymer can be determined by preparing a 0.3 mm-thick press sheet and measuring the press sheet by infrared absorption spectrometry using an infrared spectrometer. A peak at 3,448 cm⁻¹, which is attributed to methyl methacrylate, is used as characteristic absorption of the resulting infrared absorption spectrum, and the absorbance is corrected with the thickness to determine the content in accordance with the following equation:$MMA = 4.1 \times log \left(I0/I\right) / t - 5.3$ [wherein, MMA represents the content (% by mass) of methyl methacrylate unit; I represents the transmitted light intensity at a frequency of 3,448 cm⁻¹; I0 represents the incident light intensity at a frequency of 3,448 cm⁻¹; and t represents the thickness (cm) of a measurement sample sheet].

A method of producing the (B1) ethylene-carboxylic acid ester copolymer is not particularly limited and, for example, a known liquid-phase polymerization method or high-pressure radical polymerization method can be employed. Examples of a method of producing the component (B1) by high-pressure radical polymerization include a method of polymerizing ethylene with a carboxylic acid ester in the presence of a radical generator at a polymerization pressure of 140 MPa to 300 MPa and a polymerization temperature of 100°C to 300°C, generally using a tank-type reactor or a tube-type reactor. Further, in order to adjust the melt flow rate, hydrogen or a hydrocarbon such as methane or ethane can be used as a molecular weight modifier.

In one embodiment of the present invention, the component (B) contains the (B1) ethylene-carboxylic acid ester copolymer, and the component (B1) has a melt flow rate of 1 g/10 min to 400 g/10 min, preferably 1 g/10 min to 200 g/10 min, more preferably 1 g/10 min to 100 g/10 min, particularly preferably 1 g/10 min to 30 g/10 min.

When the component (B1) is an ethylene-(meth)acrylic acid ester copolymer, the melt flow rate is preferably 1 g/10 min to 40 g/10 min, more preferably 1 g/10 min to 30 g/10 min, particularly preferably 2 g/10 min to 30 g/10 min.

When the component (B1) is not an ethylene-(meth)acrylic acid ester copolymer but is, for example, an ethylene-vinyl carboxylate copolymer such as an ethylene-vinyl acetate copolymer or an ethylene-carboxylic acid-allyl copolymer such as an ethylene-allyl acetate copolymer, the melt flow rate is 50 g/10 min to 400 g/10 min, preferably 100 g/10 min to 400 g/10 min, more preferably 150 g/10 min to 400 g/10 min.

In the hot melt adhesive according to one embodiment of the present invention, when the melt flow rate of the component (B1) is in the above-described range, stringing is further reduced and the thermal stability is further improved.

It is noted here that, in the present specification, the melt flow rate is a value measured at 190°C with a 2.16-kg load in accordance with JIS K7210.

As the (B1) ethylene-carboxylic acid ester copolymer, a commercially available product can be used. Examples of the commercially available product of the component (B1) include:
ACRYFT WH401-F (trade name), ACRYFT WH206-F (trade name), ACRYFT WD301-F (trade name), and ACRYFT WD203-1 (trade name), which are manufactured by Sumitomo Chemical Co., Ltd.;
LOTRYL 17BA07N (trade name), LOTRYL 24MA02N (trade name), LOTADER 4503 (trade name), and LOTADER 8200 (trade name), which are manufactured by Arkema K.K.;
NUC-6220 (trade name) and DPDJ-9169 (trade name) which are manufactured by Dow Chemical Company; and
ULTRATHENE 680 (trade name) and ULTRATHENE 681 (trade name) which are manufactured by Tosoh Corporation.

The (B) ethylene-carboxylic acid ester copolymer may also contain (B2) other ethylene-carboxylic acid ester copolymer. The (B2) other ethylene-carboxylic acid ester copolymer is an ethylene-carboxylic acid ester copolymer other than the component (B1), specifically, for example, an ethylene-carboxylic acid ester copolymer in which the content of a structural unit derived from the carboxylic acid ester is not 2% by mass or more and less than 25% by mass (i.e., this content is less than 2% by mass, or 25% by mass or more more), or whose melt flow rate is not 1 to 400 g/10 min (i.e., this melt flow rate is lower than 1 g/10 min, or higher than 400 g/10 min).

The hot melt adhesive according to one embodiment of the present invention may also contain other ethylene-based polymer in addition to the (A) copolymer of ethylene with an olefin having 3 to 20 carbon atoms and the (B) ethylene-carboxylic acid ester copolymer. The other ethylene-based polymer is, for example, an ethylene-carboxylic acid copolymer, or an ethylene-carboxylic anhydride copolymer.

The term "ethylene-carboxylic acid copolymer" used herein refers to a copolymer of ethylene and a carboxylic acid having an ethylenic double bond.

The "carboxylic acid having an ethylenic double bond" is a compound having an ethylenic double bond and a carboxyl group, and it is not particularly limited as long as the intended hot melt adhesive of the present invention can be obtained. Specific examples of such a compound include oleic acid, linoleic acid, maleic acid, itaconic acid, succinic acid, acrylic acid, and methacrylic acid.

Specific examples of the ethylene-carboxylic acid copolymer include copolymers of ethylene and acrylic acid, and copolymers of ethylene and methacrylic acid.

The "ethylene-carboxylic anhydride copolymer" refers to a copolymer of ethylene and a carboxylic anhydride having an ethylenic double bond.

The "carboxylic anhydride having an ethylenic double bond" is a compound having a carboxylic anhydride group formed by dehydration-condensation of two carboxyl groups, and it is not particularly limited as long as the intended hot melt adhesive of the present invention can be obtained. Specific examples of such a compound include maleic anhydride.

Specific examples of the ethylene-carboxylic anhydride copolymer include copolymers of ethylene and maleic anhydride.

### <(C) Wax>

In one embodiment of the present invention, the (C) wax" is an organic matter which has a weight-average molecular weight of less than 10,000 and is solid at normal temperature but becomes liquid when heated, and the (C) wax is not particularly limited as long as it is a material which is generally referred to as "wax" and has wax-like properties, and with which the intended hot melt adhesive of the present invention can be obtained.

The hot melt adhesive according to one embodiment of the present invention, by containing the (C) wax, exhibits superior adhesion in a high-temperature range as well as superior hot tack property and stringiness.

Examples of the (C) wax include Fischer-Tropsch waxes, paraffin waxes, microcrystalline waxes, polyethylene waxes, and polypropylene waxes. As the wax, a commercially available product can be used, and the above-exemplified waxes may be used singly or in combination.

In the present specification, the (C) wax preferably contains a Fischer-Tropsch wax. This "Fischer-Tropsch wax" is a wax that is synthesized by a Fischer-Tropsch method and generally referred to as "Fischer-Tropsch wax". The Fischer-Tropsch wax is a wax fractionated from a wax whose component molecules have a relatively broad carbon number distribution such that the component molecules of the fractionated wax have a relatively narrow carbon number distribution. Representative Examples of the Fischer-Tropsch wax include SASOL H1 (trade name), SASOL C105 (trade name), and SASOL C80 (trade name), all of which are commercially available from Sasol Wax GmbH Co. The hot melt adhesive according to one embodiment of the present invention has a higher thermal stability and exhibits superior adhesion in a high-temperature range when it contains a Fischer-Tropsch wax.

The melting point of the (C) wax may be, for example, 60 to 160°C, or 65 to 150°C.

The melting point of the Fischer-Tropsch wax is preferably 70 to 120°C. The melting point of the wax is a value measured by differential scanning calorimetry (DSC). Specifically, 10 mg of a sample is weighed in an aluminum container and measured at a heating rate of 10°C/min using DSC6220 (trade name) manufactured by SII NanoTechnology Inc., and the thus determined temperature of a melting peak top is defined as the melting point.

When the melting point of the (C) wax is in the above-described range, the hot melt adhesive according to one embodiment of the present invention exhibits superior adhesion in a high-temperature range as well as superior hot tack property and stringiness.

### <(D) Tackifying Resin>

The hot melt adhesive according to one embodiment of the present invention preferably contains (D) a tackifying resin in addition to the components (A), (B), and (C). The hot melt adhesive according to one embodiment of the present invention exhibits markedly improved low-temperature adhesion and superior hot tack property when it contains the (D) tackifying resin.

The (D) tackifying resin is not particularly limited as long as it is usually used in hot melt adhesives and the intended hot melt adhesive of the present invention can be obtained. Taking into consideration the intended hot melt adhesive of the present invention, the (D) tackifying resin preferably contains both (D1) a partially hydrogenated tackifying resin and (D2) a completely hydrogenated tackifying resin.

In the present specification, the (D1) partially hydrogenated tackifying resin is a tackifying resin in which hydrogen is added to some of the double bonds contained in the tackifying resin, and the (D2) completely hydrogenated tackifying resin is a tackifying resin in which hydrogen is added to all of the double bonds contained in the tackifying resin.

The (D1) partially hydrogenated tackifying resin has good compatibility with the (B) ethylene-carboxylic acid ester copolymer, while the (D2) completely hydrogenated tackifying resin has a good compatibility with the (A) copolymer of ethylene with an olefin having 3 to 20 carbon atoms. In other words, when the (D) tackifying resin contains both of the components (D1) and (D2), the compatibility of the hot melt adhesive as a whole is improved, as a result of which the thermal stability is markedly improved.

Examples of the (D) tackifying resin include natural rosins, modified rosins, hydrogenated rosins, glycerol esters of natural rosins, glycerol esters of modified rosins, pentaerythritol esters of natural rosins, pentaerythritol esters of modified rosins, pentaerythritol esters of hydrogenated rosins, copolymers of natural terpenes, three-dimensional polymers of natural terpenes, hydrogenated derivatives of copolymers of hydrogenated terpenes, polyterpene resins, hydrogenated derivatives of phenolic modified terpene resins, aliphatic petroleum hydrocarbon resins, hydrogenated derivatives of aliphatic petroleum hydrocarbon resins, aromatic petroleum hydrocarbon resins, hydrogenated derivatives of aromatic petroleum hydrocarbon resins, cyclic aliphatic petroleum hydrocarbon resins, and hydrogenated derivatives of cyclic aliphatic petroleum hydrocarbon resins. These tackifying resins may be used singly or in combination. As the tackifying resin, a liquid-type tackifying resin can also be used as long as it is colorless to pale yellow in color tone and has good thermal stability with substantially no odor.

The (D) tackifying resin preferably contains both a hydrocarbon resin having a softening point of lower than 120°C and a hydrocarbon resin having a softening point of 120°C or higher. In the hot melt adhesive according to one embodiment of the present invention, by incorporating both a hydrocarbon resin having a softening point of lower than 120°C and a hydrocarbon resin having a softening point of 120°C or higher, not only stringing can be further reduced while further improving the adhesion, but also the thermal stability is further improved. It is noted here that the softening point of the (D) tackifying resin is measured in accordance with JIS K2207.

As the (D) tackifying resin, a commercially available product can be used. Examples thereof include: T-REZ HC103 (trade name), T-REZ HA103 (trade name), and T-REZ HA125 (trade name), which are manufactured by ENEOS Corporation; ECR5600 (trade name) manufactured by Exxon Mobil Corporation; MARUKACLEAR H (trade name) manufactured by Maruzen Petrochemical Co., Ltd.; CLEARON K100 (trade name) manufactured by Yasuhara Chemical Co., Ltd.; ARKON M100 (trade name) manufactured by Arakawa Chemical Industries, Ltd.; I-MARV S100 (trade name), I-MARV Y135 (trade name), and I-MARV P125 (trade name), which are manufactured by Idemitsu Kosan Co., Ltd.; CLEARON K4090 (trade name) and CLEARON K4100, which are manufactured by Yasuhara Chemical Co., Ltd.; ECR231C (trade name) and ECR179EX (trade name), which are manufactured by Exxon Mobil Corporation; and REGALITE R7100 (trade name) manufactured by Eastman Chemical Co. These commercially available tackifying resins may be used singly or in combination.

As the (D1) partially hydrogenated tackifying resin, a commercially available product can be used. As the commercially available product, for example, T-REZ HC103 (trade name) manufactured by ENEOS Corporation or ARKON M100 (trade name) manufactured by Arakawa Chemical Industries, Ltd. is preferred and, as the (D2) completely hydrogenated tackifying resin, for example, T-REZ HA103 (trade name), T-REZ HA125 (trade name), or I-MARV P125 (trade name) manufactured by Idemitsu Kosan Co., Ltd. is preferred.

In one embodiment of the present invention, the (A1) metallocene-based copolymer of ethylene with propylene is contained in an amount of preferably 5 to 60 parts by mass, particularly preferably 5 to 30 parts by mass, most desirably 5 to 25 parts by mass, per a total of 100 parts by mass of the (A) copolymer of ethylene with an olefin having 3 to 20 carbon atoms, the (B) ethylene-carboxylic acid ester copolymer, and the (C) wax.

In the hot melt adhesive according to one embodiment of the present invention, when the content of the (A1) metallocene-based copolymer of ethylene with propylene is in the above-described range, not only a higher thermal stability is obtained and the hot tack property and the heat-resistant creep property are markedly improved, but also the low-temperature adhesion is improved at a high level.

In one embodiment of the present invention, the (B1) ethylene-carboxylic acid ester copolymer is contained in an amount of preferably 4 to 20 parts by mass, particularly preferably 5 to 15 parts by mass, most desirably 5 to 12 parts by mass, per a total of 100 parts by mass of the (A) copolymer of ethylene with an olefin having 3 to 20 carbon atoms, the (B) ethylene-carboxylic acid ester copolymer, and the (C) wax.

In the hot melt adhesive according to one embodiment of the present invention, when the content of the (B1) ethylene-carboxylic acid ester copolymer is in the above-described range, stringing is further reduced and the thermal stability and the heat-resistant creep property are improved at high levels.

In one embodiment of the present invention, the (C) wax is contained in an amount of preferably 20 to 60 parts by mass, particularly preferably 30 to 55 parts by mass, most desirably 30 to 45 parts by mass, per a total of 100 parts by mass of the (A) copolymer of ethylene with an olefin having 3 to 20 carbon atoms, the (B) ethylene-carboxylic acid ester copolymer, and the (C) wax.

When the content of the (C) wax is in the above-described range, the hot melt adhesive according to one embodiment of the present invention has a higher thermal stability as well as a higher adhesive strength in a high-temperature range.

In one embodiment of the present invention, the (D) tackifying resin is contained in an amount of preferably 40 to 110 parts by mass, particularly preferably 40 to 110 parts by mass, most desirably 55 to 90 parts by mass, per a total of 100 parts by mass of the (A) copolymer of ethylene with an olefin having 3 to 20 carbon atoms, the (B) ethylene-carboxylic acid ester copolymer, and the (C) wax.

In the hot melt adhesive according to one embodiment of the present invention, when the content of the (D) tackifying resin is in the above-described range, the low-temperature adhesion and the hot tack property are improved at high levels.

In the hot melt adhesive according to one embodiment of the present invention, it is preferred that: the (A) copolymer of ethylene with an olefin having 3 to 20 carbon atoms contains both (A1) a metallocene-based copolymer of ethylene with propylene and (A2) a metallocene-based copolymer of ethylene with octene; the (B) ethylene-carboxylic acid ester copolymer contains (B1) an ethylene-(meth)acrylic acid ester copolymer which has a structural unit derived from a carboxylic acid ester in an amount of 2% by mass or more and less than 25% by mass, and a melt flow rate of 1 to 400 g/10 min; and the (C) wax contains a Fischer-Tropsch wax.

In the hot melt adhesive according to one embodiment of the present invention: the (A) copolymer of ethylene with an olefin having 3 to 20 carbon atoms contains both (A1) a metallocene-based copolymer of ethylene with propylene and (A2) a metallocene-based copolymer of ethylene with octene, which is modified with maleic anhydride; the (B) ethylene-carboxylic acid ester copolymer contains (B1) an ethylene-methyl methacrylate copolymer which has a structural unit derived from methyl (meth)acrylate in an amount of 2% by mass or more and less than 25% by mass, and a melt flow rate of 1 to 400 g/10 min; the (C) wax contains a Fischer-Tropsch wax; and the (D) tackifying resin is further incorporated.

The hot melt adhesive according to one embodiment of the present invention contains: 5 to 60 parts by mass of the (A1) metallocene-based copolymer of ethylene with propylene; 1 to 10 parts by mass of the (A2) metallocene-based copolymer of ethylene with octene, which is modified with maleic anhydride; 4 to 20 parts by mass of the (B1) ethylene-methyl methacrylate copolymer which has a structural unit derived from methyl methacrylate in an amount of 2% by mass or more and less than 25% by mass; 20 to 60 parts by mass of the Fischer-Tropsch wax; and 40 to 110 parts by mass of the (D) tackifying resin, per a total of 100 parts by mass of the (A) copolymer of ethylene with an olefin having 3 to 20 carbon atoms, the (B) ethylene-carboxylic acid ester copolymer, and the (C) wax.

The hot melt adhesive according to one embodiment of the present invention may further contain various additives as required. Examples of the additives include plasticizers, stabilizers (ultraviolet absorbers and antioxidants), fine particulate fillers, and fluorescent brighteners.

A "plasticizer" is incorporated for the purposes of reducing the melt viscosity of the hot melt adhesive, imparting the hot melt adhesive with flexibility and improving the wettability of the hot melt adhesive to an adherend, and the "plasticizer" is not particularly limited as long as it is compatible with the components (A) to (C) and the intended hot melt adhesive of the present invention can be obtained. Examples of the plasticizer include paraffinic oils, naphthenic oils, and aromatic oils. Colorless and odorless paraffinic oils are particularly preferred.

As the plasticizer, a commercially available product can be used. Examples thereof include: WHITE OIL BROOM 350 (trade name) manufactured by Kukdong Oil & Chemicals Co., Ltd.; DIANA FRESIA S32 (trade name), DIANA PROCESS OIL PW-90 (trade name), and DN OIL KP-68 (trade name), which are manufactured by Idemitsu Kosan Co., Ltd.; ENERPER M1930 (trade name) manufactured by BP Chemicals, Inc.; KAYDOL (trade name) manufactured by Crompton Corporation; and PRIMOL 352 (trade name) manufactured by ESSO Corp. These plasticizers may be used singly or in combination.

A "stabilizer" is incorporated for the purpose of improving the stability of the hot melt adhesive by inhibiting a molecular weight reduction, gelation, coloration, odor generation and the like of the hot melt adhesive that are caused by heat, air, light and the like, and the stabilizer is not particularly limited as long as the intended hot melt adhesive of the present invention can be obtained. Examples of the stabilizer include antioxidants and ultraviolet absorbers.

An "ultraviolet absorber" is used for improving the light resistance of the hot melt adhesive. An "antioxidant" is used for inhibiting oxidative degradation of the hot melt adhesive. The antioxidant and the ultraviolet absorber are not particularly limited as long as they are commonly used in hot melt adhesives and the below-described intended paper product can be obtained.

Examples of the "antioxidant" include phenolic antioxidants, sulfur-based antioxidants, and phosphorus-based antioxidants. Examples of the ultraviolet absorber include benzotriazole-based ultraviolet absorbers and benzophenone-based ultraviolet absorbers. Further, a lactone-based stabilizer can be added as well. These may be used singly or in combination.

As the stabilizer, a commercially available product can be used. Examples thereof include: SUMILIZER GM (trade name), SUMILIZER TPD (trade name), and SUMILIZER TPS (trade name), which are manufactured by Sumitomo Chemical Co. Ltd.; IRGANOX 1010 (trade name), IRGANOX HP2225FF (trade name), IRGAFOS 168 (trade name), and IRGANOX 1520 (trade name), which are manufactured by BASF Ltd.; ADK STAB AO-60 (trade name) manufactured by ADEKA Corporation; and JF77 (trade name) and JP-650 (trade name) which are manufactured by Johoku Chemical Co., Ltd. These stabilizers may be used singly or in combination.

The hot melt adhesive according to one embodiment of the present invention may further contain a fine particulate filler. The fine particulate filler is not particularly limited as long as it is commonly used and the intended hot melt adhesive of the present invention can be obtained. Examples of the "fine particulate filler" include mica, calcium carbonate, kaolin, talc, titanium oxide, diatomaceous earth, urea resin, styrene beads, calcined clay, and starch. These fine particulate fillers preferably have a spherical shape, and their dimensions (diameter in the case of a spherical shape) are not particularly limited.

Examples of a commercially available product of the fluorescent brightener include TINOPAL OB manufactured by BASF Ltd.

The hot melt adhesive according to one embodiment of the present invention can be produced by blending the (A) copolymer of ethylene with an olefin having 3 to 20 carbon atoms, the (B) ethylene-carboxylic acid ester copolymer, the (C) wax and, as required, the (D) tackifying resin and/or the above-described various additives in accordance with a generally known hot melt adhesive production method.

For example, the hot melt adhesive according to one embodiment of the present invention can be produced by blending and heat-melting prescribed amounts of the above-described components. An order of adding the components, a heating method, and the like are not particularly limited as long as the intended hot melt adhesive can be obtained.

A method of applying the hot melt adhesive is not particularly limited as long as the intended paper product can be obtained; however, a hot melt applicator is widely employed. Examples of the hot melt applicator include ProBlue P4 Melter (trade name) and ProBlue P10 Melter (trade name) which are manufactured by Nordson Corporation.

Application methods are generally classified into contact application and non-contact application. The "contact application" refers to an application method in which an ejector is brought into contact with a member or a film at the time of applying the hot melt adhesive, and the "non-contact application" refers to an application method in which an ejector is not brought into contact with a member or a film at the time of applying the hot melt adhesive. Examples of a contact application method include slot coater coating and roll coater coating, and examples of a non-contact application method include: spiral coating by which the hot melt adhesive can be applied in a spiral form; omega coating and control seam coating by which the hot melt adhesive can be applied in a wave form; slot spray coating and curtain spray coating by which the hot melt adhesive can be applied in a planar form; dot coating by which the hot melt adhesive can be applied in the form of dots; and bead coating by which the hot melt adhesive can be applied in a linear form.

When the hot melt adhesive according to one embodiment of the present invention is applied using a hot melt applicator (even when the hot melt adhesive is discharged and applied in a direction horizontal to the ground using the hot melt applicator), a string-like matter of the hot melt adhesive is hardly discharged. Therefore, an adherend and the applicator are not contaminated with a string-like matter.

The hot melt adhesive according to one embodiment of the present invention is widely utilized in, for example, electronic components, woodworking, building materials, sanitary materials, and paper products. The hot melt adhesive according to one embodiment of the present invention can be suitably used for producing paper products and is thus useful as a hot melt adhesive for paper products.

The paper product according to one embodiment of the present invention is a paper product that is produced using the above-described hot melt adhesive. A type of the paper product is not particularly limited as long as the paper product is produced using the above-described hot melt adhesive, and specific examples of the paper product include bound books, calendars, corrugated cardboards, and cartons. Taking into consideration the properties of the hot melt adhesive according to one embodiment of the present invention, the paper product according to one embodiment of the present invention is particularly effective as a paperboard such as a corrugated cardboard or a carton.

### [Examples]

For the purpose of describing the present invention in more detail and more concretely, the present invention will now be described by way of Examples thereof. The below-described Examples, however, are provided for merely describing the present invention and do not limit the present invention by any means. Components used for formulating hot melt adhesives are shown below.
(A) Copolymer of Ethylene with Olefin Having 3 to 20 Carbon Atoms
   (A1-1) metallocene-based copolymer of ethylene with propylene (ethylene content: 6.0% by mass, melting point: 97°C, melt viscosity at 190°C: 1,200 mPa.s, VISTAMAXX 88880 (trade name) manufactured by Exxon Mobil Corporation)
   (A1-2) metallocene-based copolymer of ethylene with propylene (ethylene content: 7.1% by mass, melting point: 112°C, melt viscosity at 190°C: 1,850 mPa.s, VISTAMAXX A (trade name) manufactured by Exxon Mobil Corporation)
   (A1-3) metallocene-based copolymer of ethylene with propylene (ethylene content: 15% by mass, melting point: 45.2°C, melt flow rate at 230°C: 20 g/10 min, VISTAMAXX 6202 (trade name) manufactured by Exxon Mobil Corporation)
   (A'1-4) Ziegler-Natta-based copolymer of ethylene with propylene (melting point: 141°C, melt viscosity at 190°C: 450 mPa.s, LEXAN TACK 2304 (trade name) manufactured by REXtac LLC)
   (A'1-5) Ziegler-Natta-based copolymer of ethylene with propylene (softening point: 120°C, melt viscosity at 190°C: 3,300 mPa.s, AERAFIN 35 (trade name) manufactured by Eastman Chemical Co.)
   (A2-1) metallocene-based copolymer of ethylene with octene, which is modified with maleic anhydride (1-octene content: 35 to 37% by mass, melt flow rate: 660 g/10 min, AFFINITY GA1000R (trade name) manufactured by Dow Chemical Company)
   (A2-2) metallocene-based copolymer of ethylene with octene (1-octene content: 35 to 37% by mass, melt flow rate: 1,000 g/10 min, AFFINITY GA1900 (trade name) manufactured by Dow Chemical Company)
   (A2-3) metallocene-based copolymer of ethylene with octene (1-octene content: 35 to 37% by mass, melt flow rate: 500 g/10 min, AFFINITY GA1950 (trade name) manufactured by Dow Chemical Company)
   (A2-4) metallocene-based copolymer of ethylene with octene (1-octene content: 35 to 37% by mass, melt flow rate: 1,200 g/10 min, AFFINITY GA1875 (trade name) manufactured by Dow Chemical Company)
   (A3-1) metallocene-based copolymer of ethylene with hexene (melt flow rate: 12 g/10 min, NIPOLON Z HM510R (trade name) manufactured by Tosoh Corporation)
   (A3-2) metallocene-based copolymer of ethylene with hexene (melt flow rate: 8 g/10 min, EXCELLEN FX402 (trade name) manufactured by Sumitomo Chemical Co., Ltd.)
(B) Ethylene-Carboxylic Acid Ester Copolymer
   (B1) ethylene-(meth)acrylic acid ester copolymer which has a structural unit derived from the (meth)acrylic acid ester in an amount of 2% by mass or more and less than 25% by mass, and a melt flow rate of 1 to 400 g/10 min
      (B1-1) ethylene-methyl methacrylate copolymer (methyl methacrylate content: 20% by mass, melt flow rate: 20 g/10 min, ACRYFT WH401-F (trade name) manufactured by Sumitomo Chemical Co., Ltd.)
      (B1-2) ethylene-methyl methacrylate copolymer (methyl methacrylate content: 20% by mass, melt flow rate: 2 g/10 min, ACRYFT WH206-F (trade name) manufactured by Sumitomo Chemical Co., Ltd.)
      (B1-3) ethylene-methyl methacrylate copolymer (methyl methacrylate content: 5% by mass, melt flow rate: 2 g/10 min, ACRYFT WH301-F (trade name) manufactured by Sumitomo Chemical Co., Ltd.)
      (B1-4) ethylene-methyl methacrylate copolymer (methyl methacrylate content: 24% by mass, melt flow rate: 2 g/10 min, LOTRYL 24MA02N (trade name) manufactured by Arkema K.K.)
      (B1-5) ethylene-ethyl acrylate copolymer (ethyl acrylate content: 20% by mass, melt flow rate: 20 g/10 min, DPDJ-9169 (trade name) manufactured by Dow Chemical Company)
      (B1-6) ethylene-vinyl acetate copolymer (vinyl acetate content: 20% by mass, melt flow rate: 160 g/10 min, ULTRATHENE 680 (trade name) manufactured by Tosoh Corporation)
      (B1-7) ethylene-vinyl acetate copolymer (vinyl acetate content: 20% by mass, melt flow rate: 350 g/10 min, ULTRATHENE 681 (trade name) manufactured by Tosoh Corporation)
   (B2) Ethylene-Carboxylic Acid Ester Copolymer Other Than Component (B1)
      (B2-1) ethylene-methyl methacrylate copolymer (methyl methacrylate content: 32% by mass, melt flow rate: 450 g/10 min, ACRYFT CM5022 (trade name) manufactured by Sumitomo Chemical Co., Ltd.)
      (B2-2) ethylene-methyl methacrylate copolymer (methyl methacrylate content: 28% by mass, melt flow rate: 150 g/10 min, ACRYFT CM5023 (trade name) manufactured by Sumitomo Chemical Co., Ltd.)
      (B2-3) ethylene-butyl acrylate copolymer (butyl acrylate content: 35% by mass, melt flow rate: 320 g/10 min, LOTRYL 35BA320 (trade name) manufactured by Arkema K.K.)
(C) Wax
   (C1-1) Fischer-Tropsch wax (melting point: 108°C, penetration: 2, SASOL H1 (trade name) manufactured by Sasol Wax GmbH Co.)
   (C1-2) Fischer-Tropsch wax (melting point: 112°C, penetration: 2, SASOL C105 (trade name) manufactured by Sasol Wax GmbH Co.)
   (C1-3) Fischer-Tropsch wax (melting point: 80°C, penetration: 2, SASOL C80 (trade name) manufactured by Sasol Wax GmbH Co.)
   (C2) paraffin wax (melting point: 69°C, penetration: 12, PARAFFIN 155F (trade name) manufactured by Nippon Seiro Co., Ltd.)
   (C3) microcrystalline wax (melting point: 84°C, penetration: 12, HI-MIC 1080 (trade name) manufactured by Nippon Seiro Co., Ltd.)
   (C4) polyethylene wax (melting point: 109°C, penetration: 7, HI-WAX 320P (trade name) manufactured by Mitsui Chemicals, Inc.)
   (C5) polypropylene wax (melting point: 140 to 148°C, penetration: 1 or less, HI-WAX NP105 (trade name) manufactured by Mitsui Chemicals, Inc.)
(D) Tackifying Resin
   (D1) Partially Hydrogenated Tackifying Resin
      (D1-1) hydrogenated alicyclic/aromatic copolymer hydrocarbon resin (softening point: 103°C, T-REZ HC103 (trade name) manufactured by ENEOS Corporation)
   (D2) Completely Hydrogenated Tackifying Resin
      (D2-1) hydrogenated alicyclic hydrocarbon resin (softening point: 103°C, T-REZ HA103 (trade name) manufactured by ENEOS Corporation)
      (D2-2) hydrogenated alicyclic hydrocarbon resin (softening point: 125°C, T-REZ HA125 (trade name) manufactured by ENEOS Corporation)
      (D2-3) hydrogenated alicyclic hydrocarbon resin (softening point: 125°C, I-MARV P125 (trade name) manufactured by Idemitsu Kosan Co., Ltd.)
(E) Stabilizer
   (E1) phenolic antioxidant (ADK STAB AO-60 (trade name) manufactured by ADEKA Corporation)
   (E2) phosphorus-based antioxidant (JP650 manufactured by Johoku Chemical Co., Ltd.)
   (E3) sulfur-based antioxidant (SUMILIZER TPS manufactured by Sumitomo Chemical Co., Ltd.)

The above-described components were melt-mixed at the respective ratios (parts by mass) shown in Tables 1 to 3. The components were melt-mixed at about 145°C for about one hour using a universal stirrer to prepare hot melt adhesives of Examples 1 to 15 and Comparative Examples 1 to 6. For each of the thus obtained hot melt adhesives of Examples and Comparative Examples, the adhesion, the thermal stability, the hot tack property, the heat-resistant creep property, and the stringiness were evaluated by the below-described respective methods.

With regard to the adhesion, each hot melt adhesive was applied to a K-liner corrugated cardboard, which was subsequently pasted together with another K-liner corrugated cardboard to obtain a sample. As for the thermal stability, the hot melt adhesives were stored in a 150°C atmosphere for one week (168 hours), after which the rate of change in viscosity and the carbide generation were checked. The setting property was evaluated by preparing samples with various press times and conducting a peeling test for the respective samples. The stringiness was checked in terms of the discharged state of each hot melt adhesive under a condition of 180°C. The evaluations are summarized below.

The above-described components were melt-mixed at the respective ratios (parts by mass) shown in Tables 1 to 3. The components were melt-mixed at about 145°C for about one hour using a universal stirrer to prepare hot melt adhesives of Examples 1 to 15 and Comparative Examples 1 to 6. For each of the thus obtained hot melt adhesives of Examples and Comparative Examples, the adhesion, the thermal stability, the hot tack property, the heat-resistant creep property, and the stringiness were evaluated by the below-described respective methods.

With regard to the adhesion, each hot melt adhesive was applied to a K-liner corrugated cardboard, which was subsequently pasted together with another K-liner corrugated cardboard to obtain a sample.

As for the thermal stability, the hot melt adhesives were stored in a 150°C atmosphere for one week (168 hours), after which the rate of change in viscosity and the carbide generation were checked.

The hot tack property and the heat-resistant creep property were evaluated by preparing samples with various press times and conducting a peeling test for the respective samples.

The stringiness was checked in terms of the discharged state of each hot melt adhesive under a condition of 180°C.

The evaluations are summarized below.

### <Adhesion to Ordinary Corrugated Cardboard>

### (Sample Preparation)

Each hot melt adhesive melted at 180°C was applied to a K-liner corrugated cardboard in an amount of 2 g/m and, after an open time of 3 seconds, this K-liner corrugated cardboard was pasted together with another K-liner corrugated cardboard at a pressing pressure of 1 kg/25 cm² for a set time (press time) of 10 seconds, whereby a sample was prepared. At least three samples were prepared for each hot melt adhesive.

### (Evaluation Method)

The thus prepared samples were aged for 24 hours in an incubator set at 60°C, 23°C, or -10°C. Subsequently, each sample was forcibly peeled off by hand under the same atmosphere. The breakage ratio of the K-linear corrugated cardboards with respect to a total adhered area was defined as "material breakage rate" (ratio of broken material), and the state of the adhered surfaces of the K-linear corrugated cardboards was evaluated. The evaluation criteria were as follows.
⊚: The material breakage rate was higher than 80%.
∘: The material breakage rate was 60% to 80%.
△: The material breakage rate was 30% or higher but lower than 60%.
×: The material breakage rate was lower than 30%.

### <Adhesion to Corrugated Cardboard Coated with Agent>

### (Sample Preparation)

Each hot melt adhesive melted at 180°C was applied to a (hardly adhesive) corrugated cardboard, whose surface had been coated with a varnish, in an amount of 2 g/m and, after an open time of 3 seconds, this corrugated cardboard was pasted together with a K-liner corrugated cardboard at a pressing pressure of 1 kg/25 cm² for a set time (press time) of 10 seconds, whereby a sample was prepared. At least three samples were prepared for each hot melt adhesive.

### (Evaluation Method)

The thus prepared samples were aged for 24 hours in an incubator set at 60°C, 23°C, or -10°C. Subsequently, each sample was forcibly peeled off by hand under the same atmosphere. The breakage ratio of the K-linear corrugated cardboard with respect to a total adhered area was defined as "material breakage rate" (ratio of broken material), and the state of the adhered surface of the K-linear corrugated cardboard was evaluated. The evaluation criteria were as follows.
⊚: The material breakage rate was higher than 80%.
∘: The material breakage rate was 60% to 80%.
△: The material breakage rate was 30% or higher but lower than 60%.
×: The material breakage rate was lower than 30%.

### <Thermal Stability>

### (Sample Preparation)

To a 100-cc glass bottle, 50 g of each hot melt adhesive was added, and this glass bottle was stored in a 150°C incubator for 168 hours to prepare a sample.

### (Evaluation Method)

The sample of each hot melt adhesive obtained by the 168-hour storage in the 150°C incubator was visually observed to check the presence or absence of carbide generation, the separation state of the hot melt adhesive, and the like. The evaluation criteria were as follows. Carbide Generation
⊚: No carbide was generated.
o: A carbide was slightly generated.
△: A carbide was generated, but did not present a practical problem.
×: A carbide was markedly generated.

### Separation State

⊚: No precipitate was formed.
∘: A precipitate was slightly formed.
△: A precipitate was formed, but did not present a practical problem.
×: A precipitate was markedly formed.

### <Hot Tack Property>

### (Sample Preparation)

Each hot melt adhesive melted at 180°C was applied to a K-liner corrugated cardboard in an amount of 2 g/m and, after an open time of 1 second, this K-liner corrugated cardboard was pasted together with another K-liner corrugated cardboard at a pressing pressure of 1 kg/25 cm² under different set time (press time) conditions of 0.5 seconds, 1.0 second, 1.5 seconds, 2.0 seconds, and 2.5 seconds, whereby samples were prepared. For each hot melt adhesive, at least three samples were prepared with the respective set times.

### (Evaluation Method)

Immediately after the completion of pressing the thus prepared samples, the samples were each forcibly peeled off at a constant rate in the vertical direction, and the set time (press time) required for the K-liner corrugated cardboards to be completely broken was measured as hot tack time.
⊚: The hot tack time was shorter than 1.5 seconds.
∘: The hot tack time was 1.5 seconds or longer, but shorter than 2.0 seconds.
△: The hot tack time was 2.0 seconds or longer, but shorter than 2.5 seconds.
×: The hot tack time was 2.5 seconds or longer.

### <Heat-Resistant Creep Property>

Each hot melt adhesive melted at 180°C was applied to a K-liner corrugated cardboard in an amount of 2 g/m and, after an open time of 3 seconds, this K-liner corrugated cardboard was pasted together with another K-liner corrugated cardboard at a pressing pressure of 1 kg/25 cm² for a set time (press time) of 10 seconds, whereby a sample was prepared. At least three samples were prepared for each hot melt adhesive.

### (Evaluation Method)

A load was applied to one of the K-liner corrugated cardboards of each sample using a weight, and the heat-resistant creep property was evaluated in terms of the temperature at which the weight fell from the sample. Specifically, in a 40°C atmosphere, a weight of 3 kg per 25 cm² of each sample (5 cm in length × 5 cm in width) was vertically hung from one of the K-liner corrugated cardboards of the sample, and the temperature was raised by 5°C at 15-minute intervals to check the temperature at which the weight fell off.
⊚: The weight falling temperature was 55°C or higher.
∘: The weight falling temperature was 50°C or higher but lower than 55°C.
△: The weight falling temperature was 45°C or higher but lower than 50°C.
×: The weight falling temperature was lower than 45°C.

### <Reduction of Stringing>

Each hot melt adhesive was intermittently applied perpendicularly to an adherend that was positioned 20 cm away from a tip of a hot melt gun. The state of droppings between the hot melt gun and the adherend was visually observed to evaluate the stringiness.

### (Measurement Conditions)

Temperature setting: a tank, a hose, and a nozzle were all set at 180°C.
Nozzle diameter: 14/1,000 inches
Nozzle: 4 orifices (number of discharge ports: 4)
Discharge pressure: 0.3 MPa
Number of discharged shots: 180 shots/min from each of the 4 orifices

The evaluation criteria were as follows.
⊚: The droppings had a granular shape.
∘: The droppings mostly had a granular shape, but included a small number of string-like droppings.
△: The droppings were a mixture of granular droppings and string-like droppings.
×: The droppings had a string-like shape.

**[Table 1]**

| | | Example | 1 | 2 | 3 | 4 | 5 | 6 | 7 | 8 |
|---|---|---|---|---|---|---|---|---|---|---|
| (A) | (A1-1) | | 9.1 | | 20.6 | | 12.2 | 35.1 | 51.5 | 17.5 |
| | (A1-2) | | | 9.1 | | 22.4 | | | | |
| | (A1-3) | | | | | | | | | |
| | (A2-1) | | 1.8 | 1.8 | 3.5 | 1.7 | | | | 8.8 |
| | (A2-2) | | | | 17.2 | 34.4 | | | | 26.4 |
| | (A2-3) | | 41.8 | 41.8 | 17.2 | | 49 | 26.4 | | |
| | (A2-4) | | | | | | | | 12.5 | |
| | (A3-1) | | | | | | | | | 3.5 |
| | (A3-2) | | | | | | | | | |
| (B) | (B1-1) | | 10.9 | 10.9 | 7 | 7 | | | | |
| | (B1-2) | | | | | | 4.1 | | | |
| | (B1-3) | | | | | | | 3.5 | 7.8 | |
| | (B1-4) | | | | | | | | | |
| | (B1-5) | | | | | | | | | |
| | (B1-6) | | | | | | | | | 8.8 |
| | (B1-7) | | | | | | | | | |
| (C) | (C1-1) | | 36.4 | 18.2 | 25.9 | 25.9 | 20.4 | 5.3 | 23.4 | |
| | (C1-2) | | | 18.2 | 8.6 | | 10.2 | 26.3 | 4.8 | 35 |
| | (C1-3) | | | | | 8.6 | | | | |
| | (C2) | | | | | | | 3.4 | | |
| | (C3) | | | | | | 4.1 | | | |
| | (C4) | | | | | | | | | |
| | (C5) | | | | | | | | | |
| (A)-(C) | | Total | 100 | 100 | 100 | 100 | 100 | 100 | 100 | 100 |
| (D) | (D1-1) | | 27.2 | 27.2 | 25.8 | 25.8 | 40.8 | 22.8 | 15.6 | 35 |
| | (D2-1) | | | 18.1 | 17.2 | 46.4 | | 52.5 | 21.8 | 40.3 |
| | (D2-2) | | | | | | | | 18.7 | |
| | (D2-3) | | 54.3 | 36.2 | 29.2 | | 63.2 | | | |
| (E) | (E1) | | 0.54 | 0.54 | 0.52 | 0.52 | 0.61 | 0.53 | 0.47 | 0.53 |
| | (E2) | | 0.54 | 0.54 | 0.52 | 0.52 | 0.61 | 0.53 | 0.47 | 0.53 |
| | (E3) | | 0.54 | 0.54 | 0.52 | 0.52 | 0.61 | 0.53 | 0.47 | 0.53 |
| (A)-(E) | | Total | 183.12 | 183.12 | 173.76 | 173.76 | 205.83 | 176.89 | 157.51 | 176.89 |
| Adhesion | | 60°C | ⊚ | ⊚ | ⊚ | ⊚ | ⊚ | ⊚ | ⊚ | ⊚ |
| (Standard) | | 23°C | ⊚ | ⊚ | ⊚ | ⊚ | ⊚ | ⊚ | ⊚ | ⊚ |
| | | -10°C | ⊚ | ⊚ | ⊚ | ⊚ | ○ | ○ | ○ | ⊚ |
| Adhesion | | 60°C | ⊚ | ⊚ | ⊚ | ⊚ | ⊚ | ⊚ | ⊚ | ⊚ |
| (hardly adhesive) | | 23°C | ⊚ | ⊚ | ⊚ | ⊚ | ⊚ | ⊚ | ⊚ | ⊚ |
| | | -10°C | ○ | ○ | ⊚ | ⊚ | ○ | ○ | ○ | ⊚ |
| Thermal stability | | Carbide | ⊚ | ⊚ | ○ | ⊚ | ○ | ⊚ | ⊚ | ○ |
| | | Precipitate | ⊚ | ⊚ | ⊚ | ⊚ | ⊚ | ⊚ | ⊚ | ○ |
| Hot tack property | | 23°C | ⊚ | ⊚ | ⊚ | ⊚ | ⊚ | ○ | ○ | ○ |
| Heat-resistant creep property | | 40°C→70°C | ⊚ | ⊚ | ⊚ | ⊚ | ⊚ | ⊚ | ⊚ | ⊚ |
| Reduction of stringing | | | ⊚ | ⊚ | ⊚ | ⊚ | ⊚ | ⊚ | ⊚ | ○ |

**[Table 2]**

| | | Example | 9 | 10 | 11 | 12 | 13 | 14 | 15 |
|---|---|---|---|---|---|---|---|---|---|
| (A) | (A1-1) | | 53 | 15.3 | 20.6 | 20.6 | 23.6 | | |
| | (A1-2) | | | | | | | 36 | 34.6 |
| | (A1-3) | | | | | | | 7.5 | |
| | (A2-1) | | 3.5 | 3 | 3.5 | 3.5 | 3.5 | | |
| | (A2-2) | | | | 17.2 | 16.2 | 16.2 | | |
| | (A2-3) | | | 41.8 | 17.2 | 17.2 | 17.2 | | |
| | (A2-4) | | 9.9 | | | | | | 10 |
| | (A3-1) | | | | | | | | 10 |
| | (A3-2) | | | | | | | 7.5 | |
| (B) | (B1-1) | | 3.1 | | | | | | |
| | (B1-2) | | | | | | | | |
| | (B1-3) | | | | | | | | |
| | (B1-4) | | | | | | 3 | | |
| | (B1-5) | | | 3.5 | | | | | |
| | (B1-6) | | | | 7 | | | 9.5 | 8.9 |
| | (B1-7) | | | | | 8 | | | |
| (C) | (C1-1) | | 20 | 36.4 | 25.9 | 25.9 | 25.9 | 25.9 | 25.9 |
| | (C1-2) | | | | 8.6 | 8.6 | 10.6 | 13.6 | 10.6 |
| | (C1-3) | | 3.5 | | | | | | |
| | (C2) | | | | | | | | |
| | (C3) | | | | | | | | |
| | (C4) | | | | | | | | |
| | (C5) | | 2 | | | | | | |
| (A)-(C) | | Total | 100 | 100 | 100 | 100 | 100 | 100 | 100 |
| (D) | (D1-1) | | | 27.3 | 25.8 | 25.8 | 25.8 | 27.3 | 27.3 |
| | (D2-1) | | | | 34.4 | 34.4 | 34.4 | | |
| | (D2-2) | | | 27.3 | | | | 54.6 | 54.6 |
| | (D2-3) | | | 27.3 | 12 | 12 | 12 | | |
| (E) | (E1) | | 0.3 | 0.55 | 0.52 | 0.52 | 0.52 | 0.55 | 0.55 |
| | (E2) | | 0.3 | 0.55 | 0.52 | 0.52 | 0.52 | 0.55 | 0.55 |
| | (E3) | | 0.3 | 0.55 | 0.52 | 0.52 | 0.52 | 0.55 | 0.55 |
| (A)-(E) | | Total | 100.9 | 183.55 | 173.76 | 173.76 | 173.76 | 183.55 | 183.55 |
| Adhesion | | 60°C | ⊚ | ⊚ | ⊚ | ⊚ | ⊚ | ⊚ | ⊚ |
| (Standard) | | 23°C | ⊚ | ⊚ | ⊚ | ⊚ | ⊚ | ⊚ | ⊚ |
| | | -10°C | ○ | ○ | ⊚ | ⊚ | ○ | ○ | ○ |
| Adhesion | | 60°C | ⊚ | ⊚ | ⊚ | ⊚ | ⊚ | ⊚ | ⊚ |
| (hardly adhesive) | | 23°C | ⊚ | ⊚ | ⊚ | ⊚ | ⊚ | ○ | ○ |
| | | -10°C | ○ | ○ | ⊚ | ⊚ | ○ | ○ | ○ |
| Thermal stability | | Carbide | ⊚ | ○ | ⊚ | ⊚ | ○ | ⊚ | ⊚ |
| | | Precipitate | ⊚ | ○ | ⊚ | ⊚ | ○ | ⊚ | ⊚ |
| Hot tack property | | 23°C | ○ | ○ | ○ | ○ | ○ | ⊚ | ⊚ |
| Heat-resistant creep property | | 40°C→70°C | ⊚ | ⊚ | ⊚ | Δ | ⊚ | ⊚ | ⊚ |
| Reduction of stringing | | | ⊚ | ⊚ | ⊚ | ○ | ○ | ○ | ○ |

**[Table 3]**

| | | Comparative Example | 1 | 2 | 3 | 4 | 5 | 6 |
|---|---|---|---|---|---|---|---|---|
| (A) | (A1-1) | | 9.1 | 9.1 | 9.1 | | 14.3 | |
| | (A1-2) | | | | | | | |
| | (A1-3) | | | | | | | |
| | (A'1-4) | | | | | 51.5 | | |
| | (A'1-5) | | | | | | | 51.5 |
| | (A2-1) | | 1.8 | 1.8 | 1.8 | | 3 | |
| | (A2-2) | | | | | | | |
| | (A2-3) | | 41.8 | 41.8 | 41.8 | | 65.6 | |
| | (A2-4) | | | | | 12.5 | | 12.5 |
| (B) | (B1-1) | | | | | | 17.1 | |
| | (B1-2) | | | | | | | |
| | (B1-3) | | | | | | | |
| | (B1-4) | | | | | 5 | | 5 |
| | (B1-5) | | | | | | | |
| | (B2-1) | | 10.9 | | | | | |
| | (B2-2) | | | 10.9 | | | | |
| | (B2-3) | | | | 10.9 | | | |
| (C) | (C1-1) | | 36.4 | 36.4 | 36.4 | 26.2 | | 26.2 |
| | (C1-2) | | | | | | | |
| | (C1-3) | | | | | 4.8 | | 4.8 |
| | (C2) | | | | | | | |
| | (C3) | | | | | | | |
| | (C4) | | | | | | | |
| | (C5) | | | | | | | |
| (A)-(C) | | Total | 100 | 100 | 100 | 100 | 100 | 100 |
| (D) | (D1-1) | | | | | 27.3 | 27.3 | 27.3 |
| | (D2-1) | | 43 | 43 | 43 | | | |
| | (D2-2) | | 35.8 | 35.8 | 35.8 | 54.6 | 54.6 | 54.6 |
| | (D2-3) | | | | | | | |
| (E) | (E1) | | 0.54 | 0.54 | 0.54 | 0.55 | 0.55 | 0.55 |
| | (E2) | | 0.54 | 0.54 | 0.54 | 0.55 | 0.55 | 0.55 |
| | (E3) | | 0.54 | 0.54 | 0.54 | 0.55 | 0.55 | 0.55 |
| (A)-(E) | | Total | 180.42 | 180.42 | 180.42 | 183.55 | 183.55 | 189.55 |
| Adhesion | | 60°C | ⊚ | ⊚ | ⊚ | | × | ○ |
| (Standard) | | 23°C | ⊚ | ⊚ | ⊚ | ⊚ | ⊚ | ⊚ |
| | | -10°C | ○ | ○ | ⊚ | ⊚ | ⊚ | ○ |
| Adhesion | | 60°C | ⊚ | ⊚ | ⊚ | | × | ○ |
| (hardly adhesive) | | 23°C | ⊚ | ⊚ | ⊚ | ⊚ | ⊚ | ⊚ |
| | | -10°C | ○ | ○ | ⊚ | ○ | ⊚ | ○ |
| Thermal stability | | Carbide | × | × | × | × | ○ | ○ |
| | | Precipitate | × | × | × | × | ○ | ○ |
| Hot tack property | | 23°C | Δ | Δ | Δ | × | × | × |
| Heat-resistant creep property | | 40°C→70°C | × | × | × | × | × | Δ |
| Reduction of stringing | | | × | ○ | × | ○ | × | Δ |

As shown in Tables 1 and 2, the hot melt adhesives of Examples 1 to 15 were excellent in terms of the adhesion, the thermal stability, the hot tack property, the heat-resistant creep property, and the reduction of stringing, and were thus confirmed to be suitable for the use in paper processing, such as adhesion of corrugated cardboards.

On the other hand, as shown in Table 3, the hot melt adhesives of Comparative Examples 1 to 6 did not contain one of the components (A1), (B1), and (C); therefore, these hot melt adhesives were given an evaluation of × for at least one of the adhesion, the thermal stability, the hot tack property, the heat-resistant creep property, and the reduction of stringing.

### [Industrial Applicability]

The present invention can provide a hot melt adhesive and a paper product to which the hot melt adhesive is applied. As the paper product according to one embodiment of the present invention, one produced from a paperboard, such as a corrugated cardboard or a carton, is particularly effective.

## Claims

1. A hot melt adhesive, comprising: (A) a copolymer of ethylene with an olefin having 3 to 20 carbon atoms; (B) an ethylene-carboxylic acid ester copolymer; and (C) a wax,
wherein the (A) copolymer of ethylene with an olefin having 3 to 20 carbon atoms comprises (A1) a metallocene-based copolymer of ethylene with propylene and
the (B) ethylene-carboxylic acid ester copolymer comprises (B1) an ethylene-carboxylic acid ester copolymer which has a structural unit derived from the carboxylic acid ester in an amount of 2% by mass or more and less than 25% by mass,
wherein the component (B1) comprises an ethylene-vinyl carboxylate copolymer or an ethylene-allyl carboxylate copolymer and
wherein the ethylene-vinyl carboxylate copolymer or the ethylene-allyl carboxylate copolymer has a melt flow rate of 50 g/10 min to 400 g/10 min as determined at 190°C with a 2.16-kg load in accordance with JIS K7210.

2. The hot melt adhesive according to claim 1, wherein the (A) copolymer of ethylene with an olefin having 3 to 20 carbon atoms comprises (A2) a metallocene-based copolymer of ethylene with octene.

3. The hot melt adhesive according to claim 2, wherein the (A2) metallocene-based copolymer of ethylene with octene comprises a metallocene-based copolymer of ethylene with octene, which is modified with a carboxylic acid and/or a carboxylic anhydride.

4. A paper product, comprising the hot melt adhesive according to any one of claims 1 to 3.

## Patentansprüche

1. Schmelzklebstoff, umfassend: (A) ein Copolymer von Ethylen mit einem Olefin, das 3 bis 20 Kohlenstoffatome aufweist; (B) ein Ethylen-Carbonsäureester-Copolymer; und (C) ein Wachs,
wobei das (A) Copolymer von Ethylen mit einem Olefin, das 3 bis 20 Kohlenstoffatome aufweist, (A1) ein Metallocen-basiertes Copolymer von Ethylen mit Propylen umfasst und
das (B) Ethylen-Carbonsäureester-Copolymer (B1) ein Ethylen-Carbonsäureester-Copolymer umfasst, das ein Strukturteil aufweist, das von dem Carbonsäureester in einer Menge von 2 Massen-% oder mehr und weniger als 25 Massen-% abgeleitet ist,
wobei die Komponente (B1) ein Ethylen-Vinylcarboxylat-Copolymer oder ein Ethylen-Allylcarboxylat-Copolymer umfasst und
wobei das Ethylen-Vinylcarboxylat-Copolymer oder das Ethylen-Allylcarboxylat-Copolymer eine Schmelzströmungsgeschwindigkeit von 50 g/10 min bis 400 g/10 min, wie bei 190 °C mit einer Last von 2,16 kg gemäß JIS K7210, bestimmt, aufweist.

2. Schmelzklebstoff nach Anspruch 1, wobei das (A) Copolymer von Ethylen mit einem Olefin, das 3 bis 20 Kohlenstoffatome aufweist, (A2) ein Metallocen-basiertes Copolymer von Ethylen mit Octen umfasst.

3. Schmelzklebstoff nach Anspruch 2, wobei das (A2) Metallocen-basierte Copolymer von Ethylen mit Octen ein Metallocen-basiertes Copolymer von Ethylen mit Octen umfasst, das mit einer Carbonsäure und/oder einem Carbonsäureanhydrid modifiziert ist.

4. Papierprodukt, umfassend den Schmelzklebstoff nach einem der Ansprüche 1 bis 3.

## Revendications

1. Adhésif thermofusible, comprenant : (A) un copolymère d'éthylène avec une oléfine ayant 3 à 20 atomes de carbone ; (B) un copolymère éthylène-ester d'acide carboxylique ; et (C) une cire,
dans lequel le copolymère d'éthylène avec une oléfine ayant 3 à 20 atomes de carbone (A) comprend (A1) un copolymère d'éthylène à base de métallocène avec du propylène et
le copolymère éthylène-ester d'acide carboxylique (B) comprend (B1) un copolymère éthylène-ester d'acide carboxylique qui a un motif structurel dérivé de l'ester d'acide carboxylique en une quantité de 2 % en masse ou plus et moins de 25 % en masse,
dans lequel le composant (B1) comprend un copolymère éthylène-carboxylate de vinyle ou un copolymère éthylène-carboxylate d'allyle et
dans lequel le copolymère éthylène-carboxylate de vinyle ou le copolymère éthylène-carboxylate d'allyle a un indice de fluidité à l'état fondu allant de 50 g/10 min à 400 g/10 min, tel que déterminé à 190 °C avec une charge de 2,16 kg conformément à la norme JIS K7210.

2. Adhésif thermofusible selon la revendication 1, dans lequel le copolymère d'éthylène avec une oléfine ayant 3 à 20 atomes de carbone (A) comprend (A2) un copolymère d'éthylène à base de métallocène avec de l'octène.

3. Adhésif thermofusible selon la revendication 2, dans lequel le copolymère d'éthylène à base de métallocène avec de l'octène (A2) comprend un copolymère d'éthylène à base de métallocène avec de l'octène, qui est modifié par un acide carboxylique et/ou un anhydride carboxylique.

4. Produit en papier, comprenant l'adhésif thermofusible selon l'une quelconque des revendications 1 à 3.
